# EUROPEAN PATENT APPLICATION

(11) **EP 3 846 267 A1**
(43) Date of publication of application: **07.07.2021**
(21) Application number: 19886936.4
(22) Date of filing: 19.11.2019
(51) Int. Cl.: H01M 10/04, F26B 3/02, F26B 25/16

(54) **METHOD FOR MANUFACTURING CYLINDRICAL BATTERY AND DRYING APPARATUS FOR PERFORMING SAME**

(30) Priority: 19.11.2018 KR 20180142659
(71) Applicant: LG Chem, Ltd., Seoul 07336, (KR)
(72) Inventor: WOO, Sang Jin, Daejeon 34122 (KR); JANG, Woosun, Daejeon 34122 (KR); KANG, Tae Won, Daejeon 34122 (KR); PARK, Ji Soo, Daejeon 34122 (KR); PARK, Dong Hyeuk, Daejeon 34122 (KR)
(74) Representative: Plasseraud IP
(86) International application number: PCT/KR2019/015879
(87) International publication number: WO 2020/106033

(57) **Abstract**

An embodiment of the present invention provides a method of manufacturing a cylindrical battery, including: manufacturing an electrode assembly having a jelly roll structure by preparing a positive electrode plate, a negative electrode plate, and a separator, and by interposing the separator between the positive electrode plate and the negative electrode plate, and then spiral-winding them; and drying the electrode assembly after manufacturing the electrode assembly, wherein the drying of the electrode assembly may include a hot air circulating drying step.

## Description

### [Technical Field]

### Cross-reference to related application(s)

This application claims priority to and the benefit of Korean Patent Application No. 10-2018-0142659 filed in the Korean Intellectual Property Office on 11/19/2018, the entire contents of which are incorporated herein by reference.

The present invention relates to a method of manufacturing a cylindrical battery and a drying apparatus for performing the same.

### [Background Art]

Recently, interest in price increases of an energy source and environmental pollution has been amplified due to depletion of fossil fuels, and thus a demand for an environmentally friendly alternative energy source is becoming an indispensable factor for future life. Therefore, various researches on power generation technologies such as nuclear power, solar power, wind power, and tidal power have been ongoing, and electrical power storage devices for more efficient use of the generated energy have also been attracting much attention.

Moreover, as technology development and demand for mobile devices have increased, there has been a rapid increase in demand for rechargeable batteries as energy sources, and accordingly, a lot of researches on batteries that may meet various demands have been conducted. Particularly, in the viewpoint of materials, there are high demands on lithium rechargeable batteries such as a lithium ion battery or a lithium ion polymer battery having merits including high energy density, a good discharging voltage, and output stability.

Such a rechargeable battery may be classified into a can-type rechargeable battery in which an electrode assembly is embedded in a cylindrical metal can, and a pouch-type rechargeable battery in which an electrode assembly is embedded in a pouch of an aluminum laminate sheet. A cylindrical rechargeable battery among the can-type rechargeable batteries is known to have relatively large battery capacity and good structural stability.

The electrode assembly embedded in the battery case of the rechargeable battery includes a positive electrode, a negative electrode, and a separator interposed between the positive electrode and the negative electrode, and generally has a jelly roll type of winding structure or a stack structure.

Meanwhile, the electrode assembly that is a main part of the rechargeable battery is manufactured by spiral-winding a positive electrode plate, a negative electrode plate, and a separator interposed between the positive electrode plate and the negative electrode plate to form a jelly roll structure, inserting it into a cylindrical can, and then injecting an electrolyte solution therein. Each electrode plate used here is manufacturing by applying an electrode active material to an electrode current collector to form an electrode plate, rolling it, and then drying the rolled electrode plate.

In the drying process, the electrode plate in a rolled state is placed on a stand for a long time in a state of vacuum and high temperature, then is discharged, and in this case, for such a long process, since a storage place and auxiliary equipment must be separately provided, there is a large loss in time, cost, and equipment in mass production. Therefore, there is a need for skills for fundamentally solving the problem.

### [Disclosure]

The present invention has been made in an effort to provide a method of manufacturing a cylindrical battery that may simplify manufacturing equipment of a battery and reduce time and cost of a battery manufacturing process, and a drying apparatus for performing the same.

An embodiment of the present invention provides a method of manufacturing a cylindrical battery, including: manufacturing an electrode assembly having a jelly roll structure by preparing a positive electrode plate, a negative electrode plate, and a separator, and by interposing the separator between the positive electrode plate and the negative electrode plate, and then spiral-winding them; and drying the electrode assembly after manufacturing the electrode assembly, wherein the drying of the electrode assembly may include a hot air circulating drying step.

The hot air circulating drying step may include: exhausting the inside of a chamber to a vacuum state; introducing the electrode assembly into a chamber of a drying apparatus; and introducing hot air into the chamber of the vacuum state.

The method of manufacturing the cylindrical battery may further include heating the inside of the chamber by a heating part prior to introducing the hot air.

The introducing of the hot air may include injecting dry air or dry nitrogen and circulating it.

The heating of the inside of the chamber may be performed at a temperature of 80 °C to 120 °C.

A time duration of the introducing of the hot air may be longer than or equal to a time duration of the vacuum state.

The method of manufacturing the cylindrical battery may further include, after the introducing of the hot air, forming a vacuum state again by exhausting the dry air or dry nitrogen.

The drying of the electrode assembly may be performed for 1 hour to 10 hours at a temperature of 80 °C to 120 °C.

The drying of the electrode assembly may be performed for the electrode assembly having the jelly roll structure.

The method of manufacturing the cylindrical battery may further include, after drying the electrode assembly, inserting the electrode assembly into a cylindrical can, and injecting an electrolyte solution into the cylindrical can.

The method of manufacturing the cylindrical battery may further include embedding the electrode assembly in a cylindrical can prior to the drying of the electrode assembly, wherein the drying of the electrode assembly may be performed in a state in which the electrode assembly is accommodated in the cylindrical can.

The method of manufacturing the cylindrical battery may further include, after drying the electrode assembly, injecting an electrolyte solution into the cylindrical can.

Another embodiment of the present invention provides a drying apparatus for a cylindrical battery, including: a chamber in which an electrode assembly is accommodated; at least one heating part positioned on at least one side wall inside the chamber; an injecting line connected to the inside of the chamber to inject dry air or dry nitrogen; and a fan module positioned on the injecting line to flow the dry air or the dry nitrogen.

The drying apparatus for the cylindrical battery may further include an exhausting line that exhausts the inside of the chamber to a vacuum state.

The drying apparatus for the cylindrical battery may further include a tray shelf that supports a tray loaded with the electrode assembly, and a plurality of conveying rollers that enter and exit the tray.

The fan module may include a fan circulating heated air, and a fan motor driving the fan and adjusting a speed of the fan.

According to the method of manufacturing the cylindrical battery and the drying apparatus for performing the same according to the embodiment of the present invention, it is possible to manufacture a cylindrical battery by performing a drying process for a shorter time using smaller and simpler equipment.

### [Description of the Drawings]

FIG. 1 illustrates a schematic view of a drying apparatus for a cylindrical battery according to an embodiment of the present invention.
FIG. 2 illustrates a front view of the drying apparatus of FIG. 1 when viewed from the front in a state in which an electrode assembly is accommodated therein.
FIG. 3 illustrates a flowchart of a hot air circulating drying step of a method of manufacturing a cylindrical battery according to an embodiment of the present invention.
FIG. 4 illustrates a change in moisture content in an electrode according to a drying time in a method of manufacturing a cylindrical battery according to an embodiment of the present invention.
FIG. 5 illustrates a change in moisture content in an electrode according to a drying time in a method of manufacturing a cylindrical battery according to a comparative example of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

In the drawings, the thicknesses of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

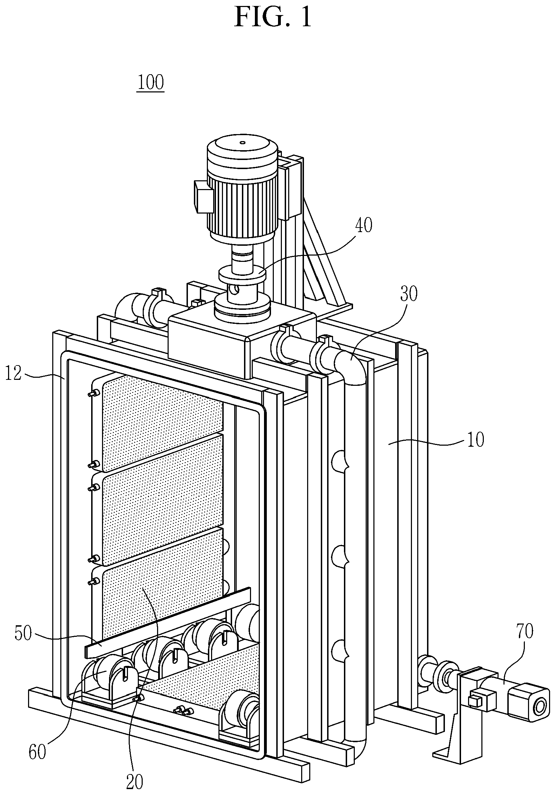

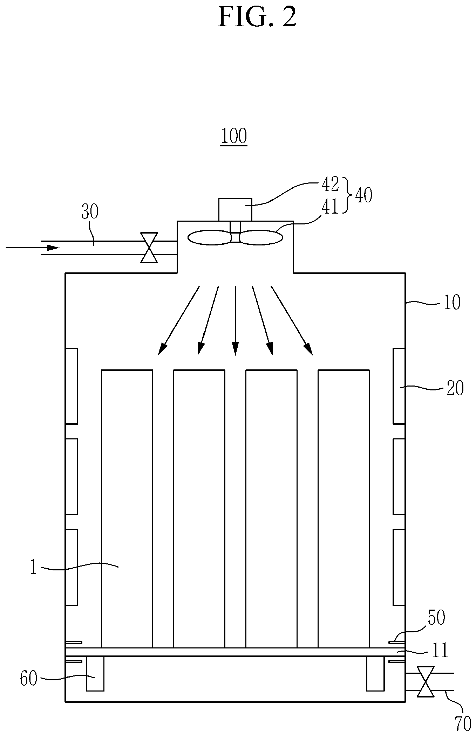

Hereinafter, a drying apparatus for a cylindrical battery according to an embodiment of the present invention will be described with reference to FIG. 1 and FIG. 2. However, the present invention is not limited thereto.

FIG. 1 illustrates a schematic view of a drying apparatus for a cylindrical battery according to an embodiment of the present invention, and FIG. 2 illustrates a front view of the drying apparatus of FIG. 1 when viewed from the front.

As shown in FIG. 1, a drying apparatus 100 for a cylindrical battery includes a chamber 10 in which an electrode assembly 1 is accommodated, at least one heating part 20 disposed on at least one side wall inside the chamber 10, an injecting line 30 connected to the inside of the chamber 10 to inject dry air or dry nitrogen, and a fan module 40 disposed on the injecting line 30 to flow the dry air or the dry nitrogen.

The electrode assembly 1 is an electrode assembly having a jelly roll structure formed by spiral-winding a positive electrode plate, a negative electrode plate, and a separator interposed between the positive electrode plate and the negative electrode plate. Electrodes of the electrode assembly 1 are formed to have a structure in which a current collector is coated with an electrode composite, and the electrode composite may include an active material, a binder, a conductive material, a plasticizer, etc. In the electrode assembly 1, the electrode assembly 1 itself in a jelly roll state may be accommodated in the chamber 10, or in a state in which the electrode assembly 1 is embedded in a cylindrical battery can (not shown), the battery can may be accommodated in the chamber 10.

The electrode assembly 1 is loaded on a tray 11 and accommodated in the chamber 10. The tray 11 may be provided with a groove and the like so that the electrode assembly 1 may be stably accommodated, but is not particularly limited thereto.

The tray 11 may be inserted into a tray shelf 50 positioned inside the chamber 10 and supported by the tray shelf 50. In this case, a plurality of conveying rollers 60 may be positioned at a lower portion of the tray shelf 50 for smooth entry and exit of the tray 11.

The chamber 10 includes an entrance 12 through which the tray 11 may enter and exit, and the entrance 12 may have a window through which the inside thereof may be observed. At least one heating part 20 is provided on a sidewall of the chamber 10 adjacent to the entrance 12. The heating part 20 may be attached to the sidewall and provided in plural, but is not particularly limited as long as it is installed at a position that does not interfere with the accommodation of the electrode assembly 1. In addition, the number of heating parts 20 may be varied as necessary. A heat source used as the heating part 20 is not particularly limited, and an infrared lamp, an LED lamp, a carbon heater, and the like may be appropriately selected and used.

The injecting line 30 coupled to be able to introduce dry air or dry nitrogen is provided at an upper portion of the chamber 10.

The fan module 40 is provided on the injecting line 30 to circulate the dry air or dry nitrogen supplied from the injecting line 30. For example, the fan module 40 may include a fan 41 provided on the injecting line 30. After being injected by operation of the fan 41, heated dry air or dry nitrogen is circulated, so that the heated gas may be evenly diffused in the chamber 10. The fan module 40 may further include a fan motor 42 that may drive the fan 41 and control a rotating speed of the fan 41.

An exhausting line 70 for exhausting the chamber 10 to a vacuum state may be provided at a lower portion of the chamber 10, and the exhausting line 70 may be connected to a vacuum pump (not shown).

In addition, the drying apparatus 100 for the cylindrical battery of the present invention may further include a plurality of holes for smoothly circulating air in the chamber 10, a temperature sensor for monitoring a temperature in the chamber 10, and the like, but is not particularly limited thereto.

Hereinafter, a method of manufacturing a cylindrical battery according to an embodiment of the present invention will be described with reference to FIG. 1 to FIG. 3.

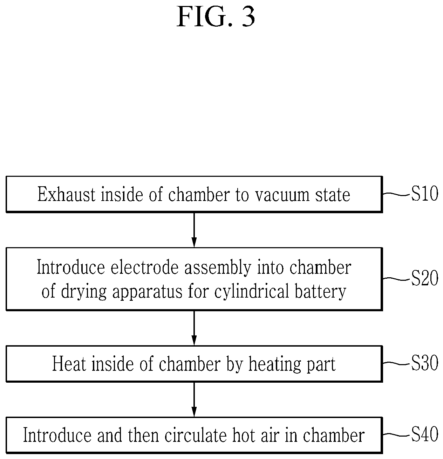

FIG. 1 illustrates a schematic view of a drying apparatus for a cylindrical battery according to an embodiment of the present invention, FIG. 2 illustrates a front view of the drying apparatus of FIG. 1 when viewed from the front, and FIG. 3 illustrates a flowchart of a hot air circulating drying step of a method of manufacturing a cylindrical battery according to an embodiment of the present invention.

First, the positive electrode plate, the negative electrode plate, and the separator interposed between the positive electrode plate and the negative electrode plate are spiral-wound to prepare the electrode assembly 1 having a jelly roll structure. Here, each electrode may be prepared by applying an electrode mixture to a current collector and rolling it, and the electrodes thus formed are prepared without a separate drying process. The electrode assembly 1 having a jelly roll structure may be obtained by interposing the separator between the prepared electrode plates and spiral-winding them.

Subsequently, the electrode assembly 1 having the jelly roll structure is dried. In this case, the electrode assembly 1 may be subjected to a drying process as it is, or may be subjected to a drying process in a state of being accommodated in a cylindrical can.

The drying of the electrode assembly 1 includes a hot air circulating drying step, and the hot air circulating drying step includes exhausting the inside of the chamber 10 of the drying apparatus 100 for the cylindrical battery to a vacuum state (S10), introducing the electrode assembly 1 in the chamber 10 (S20), heating the inside of the chamber 10 by the heating part 20 (S30), and introducing and then circulating hot air in the chamber 10 (S40).

For hot air circulating drying, first, step S10 of exhausting the inside of the chamber 10 to the vacuum state is performed. This may be performed by the exhausting line 70 connected to the inside of the chamber 10, and the exhausting line 70 may be connected to a vacuum pump (not shown) to allow the inside of the chamber 10 to be under vacuum.

Then, the electrode assembly 1 is introduced into the chamber 10 of the drying apparatus 100 for the cylindrical battery (S20). The introducing of the electrode assembly 10 may be performed by supporting the tray 11 to the tray shelf 50 through the entrance 12 of the chamber 10 in a state in which the electrode assembly 1 is loaded on the tray 11. In this case, the tray 11 may include a plurality of grooves (not shown) for stably accommodating the plurality of electrode assemblies 1. In addition, the entry and exit of the tray 11 may be smoothly performed by the conveying roller 60 positioned under the tray shelf 50.

Next, the inside of the chamber 10 is heated by the heating part 20 (S30). The heating is performed by the heating part 20 described above. The heating by the heating part 20 is performed until a temperature inside the chamber 10 is in a range of 80 °C to 120 °C. When the heating temperature is less than 80 °C, drying efficiency is lowered, which is undesirable, and when the heating temperature is more than 120 °C, the electrode assembly 1 may be damaged, which is undesirable. In this case, the inside of the chamber 10 may be in a vacuum state. The vacuum state may be maintained for 10 to 30 minutes, and may be appropriately adjusted according to a length of an entire drying process. Thereby, impurities and the like existing in the chamber may be eliminated before the introducing of the hot air.

Next, the drying of the electrode assembly 1 is performed by introducing the hot air into the chamber 10 and then circulating it (S40). That is, dry air or dry nitrogen is introduced into the chamber 10 through the injecting line 30 connected to the inside of the chamber 10. It may preferably be nitrogen. The dry air or dry nitrogen may be introduced until an internal pressure is about 30 kPa to 100 kPa. The introduced dry air or dry nitrogen may act as hot air without a separate additional heating process because the inside of the chamber is already heated. Subsequently, the hot air may be circulated by driving the fan 41 provided in the fan module 40. In this case, an injecting pressure of the dry air or dry nitrogen is 500 kPa, but the inside of the chamber may be pressurized to 30 kPa to 100 kPa, and a rotating speed of the fan 41 may be 30 Hz, but is not limited thereto, and it may be appropriately adjusted according to a drying condition or situation.

The hot air circulating drying may be performed for 1 hour to 10 hours in a temperature range of 80 °C to 120 °C. When a drying temperature is less than 80 °C, sufficient drying may not be achieved, and when it is higher than 120 °C, damage such as shrinkage of the separator may occur. In addition, when a drying time is less than 1 hour, it is not preferable because sufficient drying is not performed, and when it is more than 10 hours, damage to the electrode assembly such as shrinkage of the separator may occur, which is not suitable. Particularly, according to the present invention, in the drying of the electrode assembly 1, in addition to the heating part 20, the hot air circulating drying step is further included, so that the electrode assembly 1 may be sufficiently dried even though drying is performed within a short time in a temperature range that is not too high. Therefore, it is possible to reduce a process time and to perform the drying process without damaging the electrode assembly 1. After the hot air circulating drying is finished, the internal dry air or dry nitrogen may be exhausted to make it a vacuum state again, and a further drying step may be performed in that state. Particularly, when the gas introduced as the hot air is nitrogen, by forming a vacuum state through a separate exhaust process as described above, it is possible to prevent a dangerous situation from being caused by a worker being exposed to nitrogen.

Subsequently, the dried electrode assembly 1 is accommodated in a cylindrical can, and then an electrolyte injecting process is performed. However, as described above, when the drying is performed in a state in which the electrode assembly 1 is accommodated in the cylindrical can, the accommodating step is omitted and the electrolyte injecting process is performed. The injecting process is to inject a non-aqueous electrolyte solution into the cylindrical can, and the non-aqueous electrolyte solution contains an organic solvent and an electrolyte salt, and those commonly used may be used without limitation. Then, a cylindrical battery may be manufactured by assembling a cap plate or the like.

Hereinafter, a specific example of the present invention and a comparative example will be described. However, the following described examples are only for illustrating the present invention more specifically, and thus the scope of the present invention should not be limited by these examples.

### [Examples]

### Example 1

The positive electrode plate, the negative electrode plate, and the separator interposed between the positive electrode plate and the negative electrode plate were spiral-wound to manufacture the electrode assembly 1 having a jelly roll structure. An initial moisture concentration of the manufactured electrode assembly 1 was 174 ppm in the positive electrode and 337 ppm in the negative electrode.

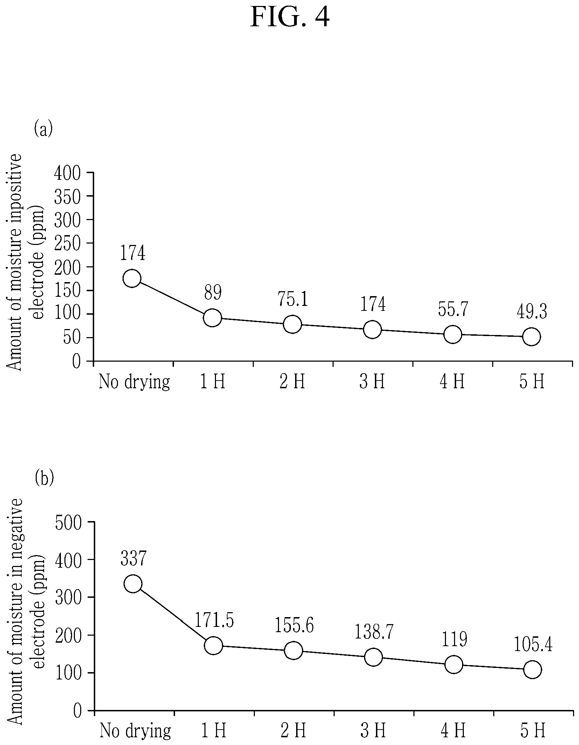

Subsequently, after the electrode assembly 1 was accommodated in the chamber 10, the drying of the electrode assembly 1 was performed while introducing hot air. In this case, a temperature inside the chamber 10 was raised to 85 °C by the heating part 20, and then a temperature of the supplied hot air was 85 °C and the hot air was supplied for 30 minutes. In the present example, a change in an amount of moisture in the electrode according to a drying time is measured and shown in FIG. 4. FIG. 4 (a) shows the change in the amount of moisture in the positive electrode, and FIG. 4 (b) shows the change in the amount of moisture in the negative electrode.

### Comparative Example 1

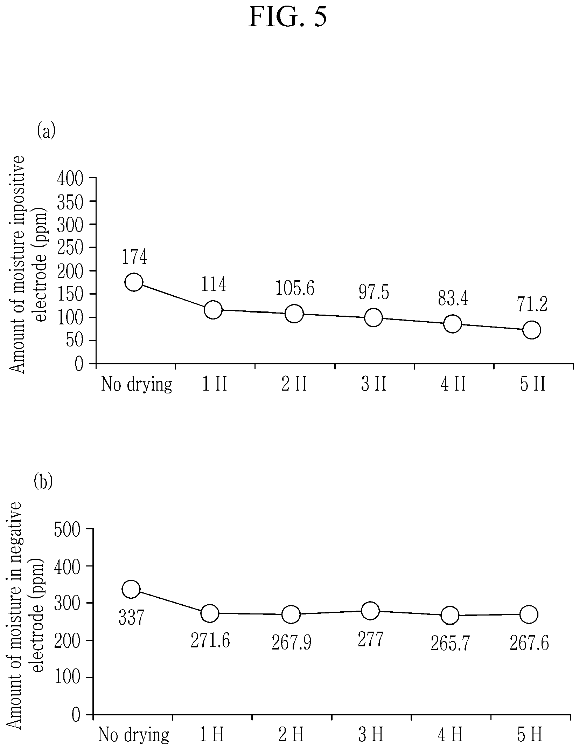

The electrode assembly 1 manufactured in the same manner as in Example 1 and having the same initial moisture concentration as that of Example 1 was accommodated in the chamber 10, and then the drying of the electrode assembly 1 was performed in a vacuum state. In this case, a temperature in the chamber 10 was raised to 85 °C by the heating part 41. In the present comparative example, a change in an amount of moisture in the electrode according to a drying time is measured and shown in FIG. 5. FIG. 5 (a) shows the change in the amount of moisture in the positive electrode, and FIG. 5 (b) shows the change in the amount of moisture in the negative electrode.

As shown in FIG. 4 and FIG. 5, according to the example of the present invention, during the drying process for the electrode assembly, the amount of moisture in the electrode may be drastically reduced within a short period of time, and thus the process time may be shortened, and accordingly, it is possible to achieve cost reduction and prevention of electrode damage.

### Example 2

The positive electrode plate, the negative electrode plate, and the separator interposed between the positive electrode plate and the negative electrode plate were spiral-wound to manufacture the electrode assembly 1 having a jelly roll structure, and the moisture concentration of the negative electrode was measured. The electrode assembly 1 having an initial negative electrode moisture concentration of 487 ppm was dried for 15 minutes under vacuum of -100 kPa and at a temperature of 100 °C, then N₂ was introduced when 15 minutes had passed, and the fan 41 was operated at a speed of 30 Hz in a state in which the nitrogen pressure was 50 kPa, so that additional drying was performed for 15 minutes while circulating nitrogen. After the drying was finished, the measured moisture concentration in the negative electrode was 257.8 ppm.

### Example 3

The positive electrode plate, the negative electrode plate, and the separator interposed between the positive electrode plate and the negative electrode plate were spiral-wound to manufacture the electrode assembly 1 having a jelly roll structure, and the moisture concentration of the negative electrode was measured. The electrode assembly 1 having an initial negative electrode moisture concentration of 487 ppm was dried for 27 minutes under vacuum of -100 kPa and at a temperature of 100 °C, then N₂ was introduced when 27 minutes had passed, and the fan 41 was operated at a speed of 30 Hz in a state in which the nitrogen pressure was 50 kPa, so that additional drying was performed for 3 minutes while circulating nitrogen. After the drying was finished, the measured moisture concentration in the negative electrode was 284.9 ppm.

### Comparative Example 2

The positive electrode plate, the negative electrode plate, and the separator interposed between the positive electrode plate and the negative electrode plate were spiral-wound to manufacture the electrode assembly 1 having a jelly roll structure, and the moisture concentration of the negative electrode was measured. The electrode assembly 1 having an initial negative electrode moisture concentration of 487 ppm was dried for 30 minutes under vacuum of -100 kPa and at a temperature of 100 °C. After the drying was finished, the measured moisture concentration in the negative electrode was 293.7 ppm.

Results of Examples 2 and 3, and Comparative Example 2, are shown in Table 1 below.

**(Table 1)**

| | Drying temperature (°C) | Total drying time (minutes) | Initial vacuum degree (kPa) | Hot air condition | Initial negative electrode moisture concentration (ppm) | Negative electrode moisture concentration after drying (ppm) |
|---|---|---|---|---|---|---|
| Example 2 | 100 | 30 | -100 | N₂ of 50 kPa is introduced after 15 minutes and circulated at a fan speed of 30 Hz | 487 | 257.8 |
| Example 3 | 100 | 30 | -100 | N₂ of 50 kPa is introduced after 27 minutes and circulated at a fan speed of 30 Hz | 487 | 284.9 |
| Comparative Example 2 | 100 | 30 | -100 | Maintain initial vacuum without introducing hot air | 487 | 293.7 |

As shown in Table 1, it can be seen that in Examples 2 and 3 in which the hot air was introduced, the negative electrode moisture concentration after the drying was lower than that in Comparative Example 2. Particularly, in the case of Example 2 in which more than half of the total drying time corresponded to the time of introducing the hot air because the time of introducing the hot air was equal to the initial vacuum maintaining time, it was confirmed that the negative electrode moisture concentration after the drying was significantly lowered.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### <Description of symbols>

100 drying apparatus
10 chamber
20 heating part
30 injecting line
40 fan module
50 tray shelf
60 conveying roller
70 exhausting line
1 electrode assembly
41 fan
42 fan motor
12 entrance

## Claims

1. A method of manufacturing a cylindrical battery, comprising:
manufacturing an electrode assembly having a jelly roll structure by preparing a positive electrode plate, a negative electrode plate, and a separator, and by interposing the separator between the positive electrode plate and the negative electrode plate, and then spiral-winding them; and
drying the electrode assembly after manufacturing the electrode assembly,
wherein the drying of the electrode assembly includes a hot air circulating drying step.

2. The method of manufacturing the cylindrical battery of claim 1, wherein the hot air circulating drying step includes:
exhausting the inside of a chamber to a vacuum state;
introducing the electrode assembly into a chamber of a drying apparatus; and
introducing hot air into the chamber of the vacuum state.

3. The method of manufacturing the cylindrical battery of claim 2, further comprising
heating the inside of the chamber by a heating part prior to introducing the hot air.

4. The method of manufacturing the cylindrical battery of claim 3, wherein
the introducing of the hot air includes injecting dry air or dry nitrogen and circulating it.

5. The method of manufacturing the cylindrical battery of claim 2, wherein
the heating of the inside of the chamber is performed at a temperature of 80 °C to 120 °C.

6. The method of manufacturing the cylindrical battery of claim 2, wherein
a time duration of the introducing of the hot air is longer than or equal to a time duration of the vacuum state.

7. The method of manufacturing the cylindrical battery of claim 4, further comprising,
after the introducing of the hot air, forming a vacuum state again by exhausting the dry air or dry nitrogen.

8. The method of manufacturing the cylindrical battery of claim 1, wherein the drying of the electrode assembly is performed for 1 hour to 10 hours at a temperature of 80 °C to 120 °C.

9. The method of manufacturing the cylindrical battery of claim 1, wherein the drying of the electrode assembly is performed for the electrode assembly having the jelly roll structure.

10. The method of manufacturing the cylindrical battery of claim 9, further comprising,
after drying the electrode assembly,
inserting the electrode assembly into a cylindrical can, and injecting an electrolyte solution into the cylindrical can.

11. The method of manufacturing the cylindrical battery of claim 1, further comprising
embedding the electrode assembly in a cylindrical can prior to the drying of the electrode assembly,
wherein the drying of the electrode assembly is performed in a state in which the electrode assembly is accommodated in the cylindrical can.

12. The method of manufacturing the cylindrical battery of claim 11, further comprising,
after drying the electrode assembly,
injecting an electrolyte solution into the cylindrical can.

13. A drying apparatus for a cylindrical battery, comprising:
a chamber in which an electrode assembly is accommodated;
at least one heating part positioned on at least one side wall inside the chamber;
an injecting line connected to the inside of the chamber to inject dry air or dry nitrogen; and
a fan module positioned on the injecting line to flow the dry air or the dry nitrogen.

14. The drying apparatus for the cylindrical battery of claim 13, further comprising
an exhausting line that exhausts the inside of the chamber to a vacuum state.

15. The drying apparatus for the cylindrical battery of claim 13, further comprising:
a tray shelf that supports a tray loaded with the electrode assembly; and
a plurality of conveying rollers that enter and exit the tray.

16. The drying apparatus for the cylindrical battery of claim 13, wherein
the fan module includes:
a fan circulating heated air; and
a fan motor driving the fan and adjusting a speed of the fan.
